**Europäisches Patentamt**

**European Patent Office**

**Office européen des brevets**

(19)

(11) Veröffentlichungsnummer : **0 380 949 B1**

(12) **EUROPÄISCHE PATENTSCHRIFT**

(45) Veröffentlichungstag der Patentschrift :
**11.11.92 Patentblatt 92/46**

(51) Int. Cl.⁵ : **G01N 21/03,** G01N 21/51, B01L 11/00

(21) Anmeldenummer : **90100705.4**

(22) Anmeldetag : **14.01.90**

(54) **Referenzgefäss zum Beurteilen der Trübung von Flüssigkeiten.**

(30) Priorität : **02.02.89 DE 3903031**

(43) Veröffentlichungstag der Anmeldung :
**08.08.90 Patentblatt 90/32**

(45) Bekanntmachung des Hinweises auf die
Patenterteilung :
**11.11.92 Patentblatt 92/46**

(84) Benannte Vertragsstaaten :
**AT BE CH DE FR GB IT LI NL SE**

(56) Entgegenhaltungen :
**DE-B- 2 741 914**
**US-A- 4 291 980**

(56) Entgegenhaltungen :
**US-A- 4 291 981**
**MESSEN PRUEFEN AUTOMATISIEREN. vol.**
**21, no. 3, März 1985, BAD WOERISHOFEN DE**
**Seiten 96 - 107; K.W. BONFIG et**
**al:˝Kalibrierung von Trübungsmessgeräten˝**

(73) Patentinhaber : **Koch, Berthold**
**Jasminweg 26**
**W-4040 Neuss 1 (DE)**

(72) Erfinder : **Koch, Berthold**
**Jasminweg 26**
**W-4040 Neuss 1 (DE)**

(74) Vertreter : **Türk, Gille, Hrabal, Leifert**
**Brucknerstrasse 20**
**W-4000 Düsseldorf 13 (DE)**

EP 0 380 949 B1

**Beschreibung**

Die Erfindung betrifft ein Referenzgefäß zum Beurteilen der Trübung von Flüssigkeiten, insbesondere von Emulsionen, mit einem durch einen Boden verschlossenen transparenten Hohlzylinder und mit einem versiegelbar aufzubringenden Deckel.

Bei vielen technischen Prozessen entstehen mit Mineralöl verunreinigte Abwässer. Die Mineralöle müssen aus dem Abwasser entfernt werden, bevor es in die Kanalisation eingeleitet wird, da sie den Betrieb einer Kläranlage stark beeinträchtigen. Um diese Trennung von Öl und Abwasser durchzuführen, wird nach einer Vorreinigung die Flüssigkeit über adsorbtiv wirkende Filter, beispielsweise Aktivkohle geleitet. Hier werden dispergierte und emulgierte Ölbestandteile abgefiltert.

Vom Gesetzgeber ist vorgeschrieben, daß der Ölgehalt des in die Kanalisation einzuleitenden Wassers bei maximal 20 mg/l oder je nach Region auch geringer liegen darf. Daher muß rechtzeitig festgestellt werden, ob der Filter erschöpft ist, so daß der Filter gewechselt werden kann, bevor es zum unzulässigen Konzentrationsanstieg von Öl am Austritt der Filtrationsstrecke kommt.

Zweckmäßigerweise wird so vorgegangen, daß vor dem Ende der Filtrationsstrecke Proben der zu reinigenden Flüssigkeit entnommen werden und anhand der Trübung festgestellt wird, ob noch eine ausreichende Reinigung durch den Filter geschieht. Eine solche Trübungskontrolle wird in der Regel einmal wöchentlich vorgenommen, so daß aufwendige automatische Kontrolleinrichtungen unwirtschaftlich sind. Vielmehr wird eine Probe der entnommenen Flüssigkeit mit einer in einem Gefäß bereitgestellten Referenzflüssigkeit visuell verglichen, um zu beurteilen, ob der Ölgehalt der Probenflüssigkeit noch zulässig ist. Die Referenzflüssigkeit wird dabei aus einem Öl-Wasser-Gemisch präpariert, das etwa den Eigenschaften der zu reinigenden Flüssigkeit entspricht.

Eine solche Beurteilung der Funktionsfähigkeit einer Filterstrecke ist schnell und einfach durchzuführen. Eine sichere Beurteilung ist jedoch nur dann gewährleistet, wenn die Referenzflüssigkeit über einen sehr langen Zeitraum ihre Eigenschaften nicht ändert. Nun sind Öl-Wasser-Emulsionen in der Regel langfristig instabil. Selbst Referenzflüssigkeiten, die nicht aus Öl und Wasser erstellt sondern aus einer klaren Flüssigkeit und einer zweiten emulgierfähigen und Trübung hervorrufenden Flüssigkeit erstellt werden, sind langfristig instabil. Die Referenzflüssigkeit müßte daher nach einer gewissen Zeit ausgetauscht werden. Dieses bedeutet aber zusätzlichen sachverständigen Aufwand, der möglichst vermieden werden sollte.

Es ist daher Aufgabe der Erfindung, ein Referenzgefäß zum Beurteilen der Trübung, insbesondere von Emulsionen, zu schaffen, mit dem auch nach langer Zeit eine zuverlässige Trübungskontrolle durchgeführt werden kann.

Diese Aufgabe wird von einem Referenzgefäß der eingangs genannten Gattung mit den Merkmalen des Kennzeichens von Anspruch 1 gelöst. Vorteilhafte Ausgestaltungen ergeben sich aus den Kennzeichen der Unteransprüche.

Beim neuen Referenzgefäß weist wenigstens der Hohlzylinder ein einem vorgegebenen Trübungswert entsprechendes Streuvermögen für Licht auf.

Dieses kann beispielsweise dadurch erreicht werden, daß die Innenwände des Hohlzylinders und auch des Bodens aufgerauht sind, wobei dieses Aufrauhen durch geeignete chemische und physikalische Techniken vorgenommen werden kann. Da das Aufrauhen an den Innenwänden des Gefäßes vorgenommen wird, können die aufgerauhten Flächen nicht verschmutzen, so daß praktisch über unbegrenzte Zeit ein einmal eingestelltes Streuvermögen aufrechterhalten wird.

Vorteilhaft ist es, wenn der Hohlzylinder aus Glas ist. Er kann dann leicht äußerlich gereinigt werden. Außerdem ist Glas mechanisch relativ stabil und unempfindlich gegen Kratzer, und es wird auch von den im Arbeitsbereich der Öl-Wasser-Trennung vorkommenden Chemikalien nicht angegriffen. So wird das Streuvermögen auch nicht durch auf der Außenseite des Gefäßes auftretende Veränderungen beeinflußt.

Es hat sich herausgestellt, daß die zum Aufrauhen von Glas am besten geeignete Technik das Sandstrahlen ist. Die gewünschte Aufrauhung der Innenseite des Referenzgefäßes, die den Trübungsgrad simulieren soll, kann leicht durch Variieren der Strahldichte und -dauer eingestellt werden.

Das Gefäß kann mit einer klaren Flüssigkeit gefüllt sein. Damit wird der Gesamt-Brechungsindex des Referenzgefäßes optimal an den Brechungsindex der zu beurteilenden Flüssigkeit angepaßt, die sich in einem zweiten Glasgefäß befindet. Es empfiehlt sich, eine frostsichere Flüssigkeit zu wählen.

Im folgenden soll die Erfindung anhand der Zeichnung, die lediglich beispielshaft eine Ausführungsform der Erfindung veranschaulicht, näher erläutert werden. Es zeigt

Fig.1 die Vorderansicht eines Referenzgefäßes gemäß der vorliegenden Erfindung und

Fig.2 einen Querschnitt durch ein Referenzgefäß, bei dem aber Deckel und Versiegelung nicht dargestellt sind.

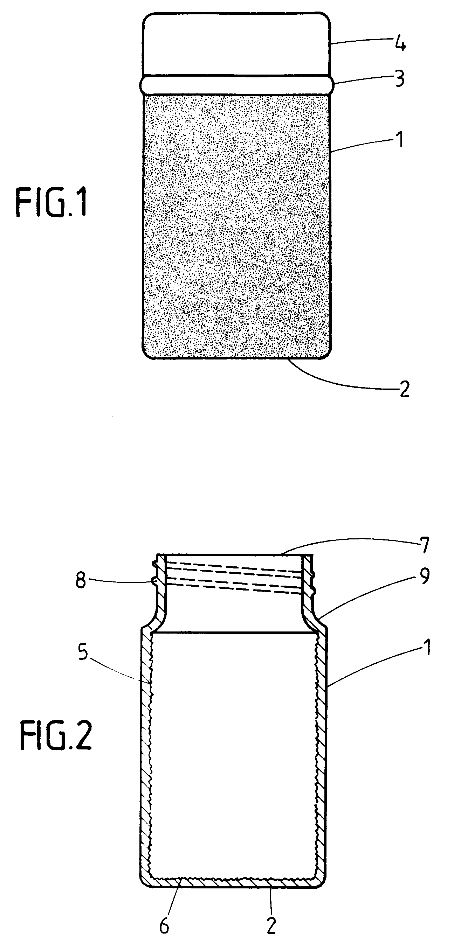

Das Referenzgefäß in Figur 1 besteht aus einem durch einen Boden (2) verschlossenen Hohlzylinder (1). Dieser Hohlzylinder (1) ist an seinen Innenflächen beispielsweise durch Sandstrahlen aufgerauht, so daß sich bei Ansicht des Referenzgefäßes der Eindruck einer Trübung ergibt. Es kann auch der Boden (2) von innen aufgerauht sein, so daß das Referenzgefäß aus den verschiedensten Lagen betrachtet werden kann, wobei sich immer der Eindruck einer Trübung ergibt. Der Hohlzylinder (1) ist mit einem Deckel (4) verschlossen. So wird verhindert, daß Schmutz in das Gefäß eindringen kann.

Der Deckel (4) ist durch eine Versiegelung (3) fest mit dem Hohlzylinder (1) verbunden und kann daher auch nicht versehentlich vom Hohlzylinder (1) entfernt werden.

In Figur 2 ist die Aufrauhung der Innenwände (5,6) des Hohlzylinders (1) sowie des Bodens (2) dargestellt. Der Hohlzylinder (1) weist an seinem oberen Ende ein Schraubgewinde (8) auf, auf das der Deckel (4) aufgeschraubt wird. Bis zur Oberkante (7) des Gewindes (8) ist der Hohlzylinder (1) mit einer Flüssigkeit gefüllt, die sinnvollerweise frostbeständig ist. Der untere Rand des fest aufgeschraubten Deckels (4) bildet mit der Anschlußkrümmung (9) des Hohlzylinders (1) eine Auskehlung, in der die Versiegelung (3) untergebracht wird. Da das Referenzgefäß vollständig mit Flüssigkeit gefüllt ist, kann es in die unterschiedlichsten Lagen gebracht werden, ohne daß durch Luftblasen im Gefäß Unsicherheiten in der Beurteilung auftreten.

Die zu beurteilende Flüsigkeit wird in ein zweites Glasgefäß mit gleichen äußeren Abmessungen wie das Referenzgefäß aber unbehandelten Wänden eingefüllt, worauf auch dieses zweite Gefäß mit einem Deckel fest verschlossen wird. Beide Gefäße können dann gleichartig bewegt werden, so daß ein Vergleich der Trübungen bei unerschiedlichen Lichteinfallswinkeln vorgenommen werden kann.

## Patentansprüche

1. Referenzgefäß zum Beurteilen der Trübung von Flüssigkeiten, insbesondere von Emulsionen, mit einem durch einen Boden verschlossenen transparenten Hohlzylinder und mit einem versiegelbar aufzubringenden Deckel, **dadurch gekennzeichnet,** daß wenigstens der Hohlzylinder (1) ein einem vorgegebenen Trübungswert entsprechendes Streuvermögen für Licht aufweist, wobei die Innenwände (5, 6) des Hohlzylinders (1) und des Bodens (2) aufgerauht sind.

2. Referenzgefäß nach Anspruch 1, dadurch gekennzeichnet, daß der Hohlzylinder (1) aus Glas besteht.

3. Referenzgefäß nach Anspruch 1 oder 2, dadurch gekennzeichnet, daß die Innenwände (5, 6) des Hohlzylinders (1) und des Bodens (2) sandgestrahlt sind.

4. Referenzgefäß nach einem der Ansprüche 1 bis 3, dadurch gekennzeichnet,

daß das Gefäß mit einer klaren Flüssigkeit gefüllt ist.

5. Referenzgefäß nach Anspruch 4, dadurch gekennzeichnet, daß die Flüssigkeit frostbeständig ist.

## Claims

1. Reference cell for determining the turbidity of liquids, in particular of emulsions, with a transparent hollow cylinder closed by a floor and with a lid which can be applied and sealed, **characterised in that** at least the hollow cylinder (1) has a light-dispersing capacity corresponding to a predetermined turbidity value, the inner walls (5,6) of the hollow cylinder (1) and of the floor (2) being roughened.

2. Reference cell according to claim 1, characterised in that the hollow cylinder (1) is made of glass.

3. Reference cell according to claim 1 or 2, characterised in that the inner walls (5,6) of the hollow cylinder (1) and of the floor (2) are sand-blasted.

4. Reference cell according to one of claims 1 to 3, characterised in that the cell is filled with a clear liquid.

5. Reference cell according to claim 4, characterised in that the liquid is frost-resistant.

## Revendications

1. Récipient de référence pour évaluer la turbidité de liquides, notamment d'émulsions, comprenant un cylindre creux transparent, fermé par un fond, et un couvercle qui peut être posé de manière scellée sur le cylindre, **caractérisé** en ce qu'au moins le cylindre creux (1) présente un pouvoir de dispersion de la lumière correspondant à une valeur de turbidité prédéfinie, les parois intérieures (5, 6) du cylindre creux (1) et du fond (2) étant rendues rugueuses.

2. Récipient de référence selon la revendication 1, **caractérisé** en ce que le cylindre creux (1) est réalisé en verre.

3. Récipient de référence selon la revendication 1 ou 2, **caractérisé** en ce que les parois intérieures (5, 6) du cylindre creux (1) et du fond (2) sont décapées au sable.

4. Récipient de référence selon l'une des revendications 1 à 3, **caractérisé** en ce que le récipient est rempli d'un liquide limpide.

5. Récipient de référence selon le revendication 4, **caractérisé** en ce que le liquide est résistant au gel.

FIG.1

FIG.2